# NEW EUROPEAN PATENT SPECIFICATION

(11) **EP 1 705 828 B2**
(45) Date of publication and mention of the opposition decision: **05.12.2012**
(45) Mention of the grant of the patent: 30.12.2009
(21) Application number: 05700439.2
(22) Date of filing: 17.01.2005
(51) Int. Cl.: H04L 29/06, H04L 12/22

(54) **A METHOD OF OBTAINING THE USER IDENTIFICATION FOR THE NETWORK APPLICATION ENTITY**
VERFAHREN ZUM ERHALTEN DER BENUTZERIDENTIFIKATION FÜR DIE NETZWERKANWENDUNGS-ENTITÄT
PROCEDE D'OBTENTION D'UNE IDENTIFICATION UTILISATEUR POUR ENTITE D'APPLICATION DU RESEAU

(30) Priority: 16.01.2004 CN 200410001029
(43) Date of publication of application: 27.09.2006
(73) Proprietor: Huawei Technologies Co., Ltd., Longgang District, Shenzhen Guangdong 518129 (CN)
(72) Inventor: HUANG, Yingxin, Huawei Administration Building, Shenzhen, Guangdong 518129 (CN)
(74) Representative: Thun, Clemens
(86) International application number: PCT/CN2005/000065
(87) International publication number: WO 2005/074188

(56) References cited:
- WO-A-2005/004456
- CN-A- 1 458 788
- JP-A- 2003 337 917
- US-A1- 2003 093 663
- 3GPP: "3GPP TS ab.cde V0.3.0: 3rd Generation Partnership Project" 3GPP TSG SA WG3 SECURITY - S3#30, October 2003 (2003-10), pages 1-28, XP002320570
- '3rd Generation Partnership Project; Technical Specification Group Core Network; Generic Authentication Architecture (GAA); Zh and Zn Interfaces based on the Diameter protocol; Protocol details ( Release 6)' 3GPP STANDARD; 3GPP TS 29.109, vol. 1.0, 01 October 2003, 06921 SOPHIA-ANTIPOLIS CEDEX FRANCE, page 1-19
- DATABASE XP050273555
- DATABASE XP050273751

## Description

### Field of the Technology

The present invention relates to the 3G radio communication technical field, and particularly, to a method for a Network Application Function (NAF) in generic authentication architecture to acquire subscriber identity information.

### Background of the Invention

In the 3G radio communication standards, generic authentication architecture (GAA) is a general architecture used by the function of plural application services to accomplish verification of subscriber identity. The generic authentication architecture can be used to achieve check of application service subscribers and verification of the subscribers' identity. The above application services can be either multicast/broadcast service, or subscriber certificate service, or instant supply of information service, or proxy service. For instance, in the case of several services in connection with one proxy, the generic authentication architecture can process the proxy as a service as well, and the system architecture can be flexible, and further more, new services developed in the future can also use the generic authentication architecture to check the application service subscribers and verify their identity.

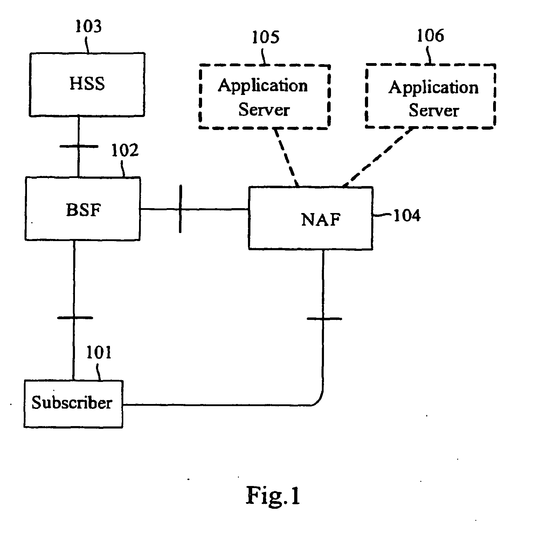

Fig.1 is the schematic diagram illustrating the construction of the generic authentication architecture. The generic authentication architecture generally consists of subscriber 101, Bootstrapping Server Function (BSF) 102 that perform initial check and verification of subscriber identity, Home Subscriber System (HSS) 103 and NAF 104. BSF 102 serves to perform mutual identity check with subscriber 101, and simultaneously generate the key shared by BSF 102 and subscriber 101. HSS 103 stores subscriber description information in a Profile that comprises all descriptive information associated with the subscriber including subscriber identity. Additionally, HSS 103 functions to generate authentication information. NAF 104 can be an application server; it can also be an application server proxy. When serving as an application server proxy, it is connected with several application servers like application server 105 and application server 106.

When a subscriber needs a service, the subscriber will go to the BSF directly for mutual authentication if the subscriber knows the service needs mutual authentication process at BSF, otherwise, the subscriber will first contact with a NAF corresponding to the service, and if the NAF uses generic authentication architecture and needs the subscriber to go to the BSF for identity verification, then it informs the subscriber to verify its subscriber identity with generic authentication architecture. Otherwise, it performs other relevant processing.

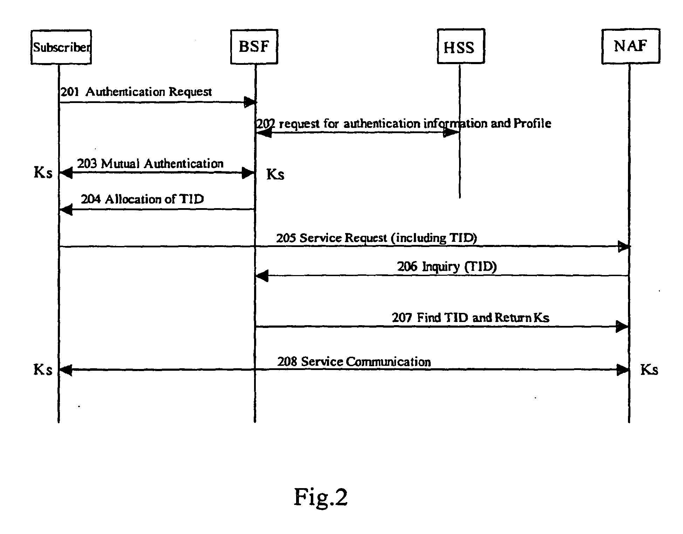

Fig.2 is a flowchart for identity verification of the existing techniques using generic authentication architecture.

Step 201, subscriber sends initial authentication request message to BSF;

Step 202, BSF inquires the subscriber's authentication information and Profile from HSS after it receives the subscriber's authentication request;

Step 203, having obtained the response message comprising the inquired information from HSS, BSF uses the obtained information to mutually authenticate using Authentication and Key Agreement (AKA) with the subscriber. After BSF and the subscriber mutually authenticate using the AKA protocol, they have shared key Ks;

Step 204, BSF allocates a Bootstrapping Transaction Identifier (B-TID) to the subscriber. The B-TID is exclusive to the subscriber and is associated with Ks;

Step 205, having received the B-TID, the subscriber sends a service application request message to NAF, and the request message comprises B-TID information;

Step 206, when NAF receives the service application request message comprising B-TID information sent by the subscriber, it performs local inquiry at NAF first. If the inquiry succeeds, it performs Step 208 directly, otherwise, it sends B-TID inquiry message to BSF and then performs Step 207;

Step 207, having received the inquiry message from NAF, BSF sends a response message of success to NAF if it can find the B-TID needed by NAF, and NAF stores the contents in the message and performs Step 208. Otherwise, BSF sends an inquiry message of response failure to NAF to inform it that the subscriber's information is NAF first. If the inquiry succeeds, it performs Step 208 directly, otherwise, it sends B-TID inquiry message to BSF and then performs Step 207;

Step 207, having received the inquiry message from NAF, BSF sends a response message of success to NAF if it can find the B-TID needed by NAF, and NAF stores the contents in the message and performs Step 208. Otherwise, BSF sends an inquiry message of response failure to NAF to inform it that the subscriber's information is not available, and NAF informs the subscriber to go to BSF for authentication again and terminates the processing flow;

The response message of success includes the inquired B-TID and shared key Ks associated with the subscriber corresponding to the inquired B-TID, or the derived key generated by shared key Ks according to NAF's security class. Here, NAF and the subscriber also share the shared key Ks or its derived key;

Step 208, NAF communicates with the subscriber, and uses shared key Ks or the derived key generated by Ks to protect the subsequent communications.

The defect of the above solution is, when NAF inquires B-TID information from BSF, BSF just returns B-TID and shared key Ks associated with the subscriber corresponding to the B-TID or the derived key generated by shared key Ks if BSF can find the information. But NAF that works as an application server or an application server proxy is not involved in the process to obtain the subscriber's identity information; therefore, it is unable to collect subscriber's charging information and/or control subscriber's access to service layer.

In the 3GPP:"3GPP TS ab.cde V0.3.0:3rd Generation Partnership Project" 3GPP TSG SA WG3 SECUNTY-S3#30, October 2003, XP002320570, a NAF requests key materials corresponding to the information supplied by the UE (e.g. a transaction identifier), and the BSF supplies to the NAF the requested key materials. The NAF is configured to acquire a shared key material established between UE and BSF, and also fetch subscriber profile; and the BSF is configured to mutually authenticate and agree on session keys that are applied between UE and NAF.

And an international application (WO 2005/004456 A) discloses a NAF node. In the NAF node, the NAF comprises a public key infrastructure portal which uses shared secret keys to communicate with a subscribe terminal. The public key infrastructure portal can communicate with the BSF to obtain a shared secret previously agreed between the BSF and the subscriber terminal, and the BAF can notify the public key infrastructure portal of the subscriber's rights to obtain accounting certificates. The NAF has means configured to obtain an account certificate from the BSF for the subscriber terminal.

### Summary of the Invention

In view of the above, the object of the present invention is to provide a method for Network Application Function (NAF) to obtain subscriber identity information, so that NAF is able to obtain subscriber identity information.

The technical solution in accordance with this invention is as follows:
the method for Network Application Function to acquire subscriber identity information includes:
storing a Bootstrapping Transaction Identifier, B-TID, and subscriber identity information corresponding to the B-TID in a Bootstrapping Server Function, BSF, in advance, said BSF is used to perform initial verification of subscriber identity;
when said BSF receives a B-TID inquiry message from said NAF, if the B-TID indicated in said B-TID inquiry message is stored in said BSF, sending the B-TID and the subscriber identity information corresponding to the B-TID to the NAF; and
storing a relationship between the B-TID and the subscriber identity information corresponding to the B-TID in the NAF.

Preferably, the method further including: presetting the time of storing the relationship between the B-TID and the subscriber identity information corresponding to the B-TID, and when the subscriber disconnects with the NAF, the NAF deleting or forbidding the B-TID and the subscriber identity information corresponding to the B-TID, if the preset time expires.

Preferably, said time of storing the relationship between the B-TID and the subscriber identity information corresponding to the B-TID is B-TID's lifetime.

Preferably, if the B-TID indicated in said B-TID inquiry message is stored in said BSF, the method further comprises: the BSF continuing to perform the subsequent steps, if said subscriber identity information indicated in said B-TID inquiry message is needed.

Preferably, if said subscriber identity information indicated in said B-TID inquiry message is needed, the method further comprises: continuing to perform the subsequent steps, after deciding to permit the return of the subscriber identity information to NAF according to operator's policy.

Preferably, if the NAF fails to get the subscriber identity information that it requests, the method further comprises: the NAF deciding whether to continue communication with the subscriber according to its own configuration.

Preferably, if the NAF fails to get the subscriber identity information that it requests, the method further comprises: the NAF deciding whether to continue communication with the subscriber according to its own configuration.

Preferably, the method further comprises: the NAF performing subscriber charging and/or control of the subscriber's access to a service application layer according to the subscriber's identity information.

Preferably, said NAF is an application server proxy or an application server.

Preferably, if said NAF is an application server proxy, the method further comprises: when the NAF forwards a message to other application servers, inserting the subscriber identity information into said message.

Preferably, wherein said subscriber identity information is the complete Profile or part of the Profile related with the subscriber identity, or the subscriber identity.

A device of Bootstrapping Server Function, BSF, includes: a first unit configured to store a Bootstrapping Transaction Identifier, B-TID, and subscriber identity information corresponding to the B-TID; a second unit configured to receive a B-TID inquiry message from a Network Application Function, NAF, if the B-TID indicated in the B-TID inquiry message is stored in the first unit, send the B-TID and the subscriber identity information corresponding to the B-TID to the NAF.

With the present invention, NAF is able to acquire subscriber identity to facilitate NAF's management of the subscribers, such as to achieve subscriber charging and access control, and reduce network load and optimize network resources with the help of access control. Furthermore, BSF can also decide according to its own policy whether to return the identity information to NAF, which makes the present invention's implementing solution more flexible and controllable. When NAF serves as an application server proxy, it is able to insert subscriber identity information into the message it forwards, which facilitates the application server that receives the forwarded message to identify the subscriber identity. It is easy and convenient to implement the present invention, and the present invention is also compatible with the existing associated flows.

### Brief Description of the Drawings

Fig.1 is a schematic diagram illustrating the construction of generic authentication architecture.
Fig.2 is a flowchart for subscriber identity verification of the prior art using generic authentication architecture.
Fig.3 is a flowchart for subscriber identity verification of the present invention using generic authentication architecture.

### Embodiments of the Invention

In order to make the technical solution of the present invention more explicit, the present invention is explained in detail as follows.

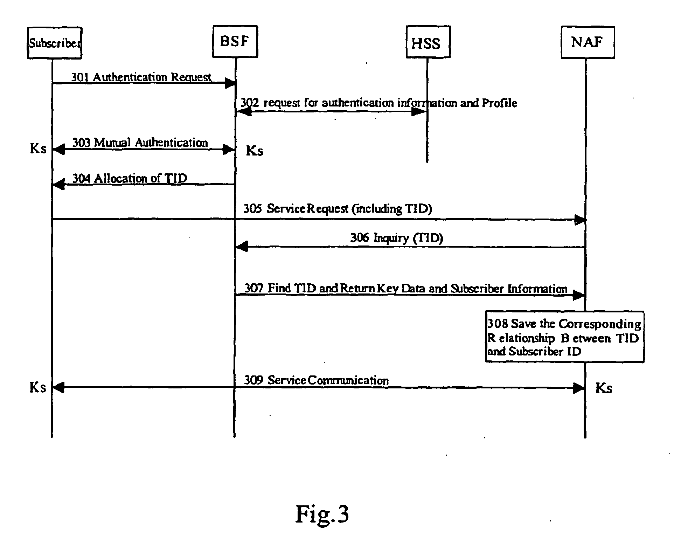

Fig. 3 is a flowchart for subscriber identity verification using the present invention's generic authentication architecture

Step 301, subscriber sends initial authentication request message to BSF;

Step 302, BSF inquires about the subscriber's authentication information and Profile from HSS after it receives the subscriber's authentication request;

Step 303, having obtained the response message including the information from HSS, BSF uses the information to mutually authenticate using AKA with the subscriber. After BSF and the subscriber mutually authenticate using the AKA protocol, i.e., authenticate each other's identity, they have shared key Ks;

Step 304, BSF allocates a B-TID to the subscriber. The B-TID is exclusive to the subscriber and is associated with shared key Ks;

BSF currently stores the B-TID used by the subscriber that has passed authentication and the corresponding relationship between the B-TID used by the subscriber and the subscriber's identity information. The subscriber's identity information is the subscriber's complete Profile, or part of the Profile that is associated with the subscriber's identity information, or only the subscriber's identity.

Step 305, having received the allocated B-TID, the subscriber sends a service application request message to NAF, and the request message carries B-TID information;

Step 306, when NAF receives the service application request message including B-TID information sent by the subscriber, it performs local inquiry at the NAF first, and if the inquiry succeeds, it performs Step 309 directly. Otherwise, it sends B-TID inquiry message to BSF and then performs Step 307;

Step 307, having received the inquiry message from NAF, BSF sends a response message of success to NAF if it can find the B-TID needed by NAF, then performs Step 308. Otherwise, BSF sends an inquiry message of failure to NAF to inform it that the subscriber's information is not available, and NAF informs the subscriber to go to BSF for re-authentication and terminates the processing flow;

The response message of success includes not only the inquired B-TID and the shared key Ks used by the subscriber corresponding to the B-TID, or the derived key generated by the shared key Ks according to NAF's security class, and the subscriber identity information corresponding to the B-TID obtained according to the corresponding relationship said in Step 304. Here, NAF and the subscriber also share the Ks or its derived key;

Step 308, NAF stores the relationship between the subscriber identity information in the above said response message of success and the subscriber's B-TID information;

Step 309, NAF communicates with the subscriber, and protects the subsequent communication with shared key Ks or the derived key generated by Ks, and simultaneously carries out subscriber charging and/or control of access to the service application layer according to the subscriber's identity information.

Thus, NAF acquires the subscriber identity information.

Additionally, in Step 307, BSF also can perform in the following way:
Having found the B-TID needed by NAF in local inquiry, BSF further decides whether it is explicitly indicated in the B-TID inquiry message from NAF that the subscriber identity information is needed; if yes, BSF adds the subscriber identity information needed by NAF into the response message of success. Otherwise, the response message of success returned to NAF does not include the subscriber identity information.

And furthermore, after BSF has decided that it is explicitly indicated in the B-TID inquiry message from NAF that the subscriber identity is needed, the method further includes: BSF decides according to operator policy whether it is permitted to return the subscriber identity information to the NAF; if yes, the response message of success includes the subscriber identity information needed by NAF, otherwise, BSF refuses to add the subscriber identity information in the returned message even if NAF explicitly indicates in the B-TID inquiry message that the subscriber identity and profile information is needed.

If NAF fails to obtain the requested subscriber identity information, NAF can decide according to its own configuration to proceed with the subsequent services or terminate its communication with the subscriber.

When NAF works as an application server proxy to forward a message to other servers, it inserts the subscriber identity into the message that it forwards, so that the receiving application servers are able to identify the subscriber.

Additionally, when the subscriber is to get access to some application server after NAF, NAF can decide if the subscriber has subscribed the service which the subscriber is about to get access to according to the subscriber's profile information stored in it. If the subscriber has not subscribed the service, NAF informs the subscriber directly that the subscriber is not authorized to use the service, therefore it is not necessary to forward the message to the application server behind NAF. In this way, the network resources are optimized.

When the subscriber releases its communication with NAF, NAF continues to store the corresponding relationship between the B-TID used by the subscriber and the subscriber's identity, and the storing time is usually the lifetime of the B-TID, because in the lifetime of the B-TID, the subscriber can continue to use the B-TID to communicate with NAF. When B-TID overtimes, the subscriber's identity is deleted when the B-TID corresponding to the subscriber identity is deleted, or, is forbidden when the B-TID corresponding to the subscriber identity is forbidden.

The above description is only the preferred embodiments of this invention and is not used to limit the protection scope thereof. All the modifications, equivalent replacements or improvements in the scope of the present invention shall be included in the protection scope of the present invention.

## Claims

1. A method for a Network Application Function, NAF, to acquire a subscriber identity information, **characterized by** comprising:
storing a Bootstrapping Transaction Identifier, B-TID of a subscriber that has passed authentication, and subscriber identity information corresponding to the B-TID in a Bootstrapping Server Function, BSF, in advance, said BSF is used to perform initial verification of subscriber identity;
when said BSF receives a B-TID inquiry message from said NAF, if the B-TID indicated in said B-TID inquiry message is stored in said BSF, sending the B-TID and the subscriber identity information corresponding to the B-TID to the NAF; and
storing a relationship between the B-TID and the subscriber identity information corresponding to the B-TID in the NAF.

2. The method according to Claim 1, further comprising: presetting the time of storing the relationship between the B-TID and the subscriber identity information corresponding to the B-TID, and when the subscriber disconnects with the NAF, the NAF deleting or forbidding the B-TID and the subscriber identity information corresponding to the B-TID, if the preset time expires.

3. The method according to Claim 2, wherein said time of storing the relationship between the B-TID and the subscriber identity information corresponding to the B-TID is B-TID's lifetime.

4. The method according to Claim 1, wherein if the B-TID indicated in said B-TID inquiry message is stored in said BSF, further comprising: the BSF continuing to perform the subsequent steps, if it is indicated in the B-TID inquiry message that the subscriber identity information is needed.

5. The method according to Claim 4, wherein if it is indicated in the B-TID inquiry message that the subscriber identity information is needed, further comprising:
continuing to perform the subsequent steps, after deciding to permit the return of the subscriber identity information to NAF according to operator's policy.

6. The method according to Claim 4 or Claim 5, if the NAF fails to get the subscriber identity information that it requests, further comprising: the NAF deciding whether to continue communication with the subscriber according to its own configuration.

7. The method according to Claim 1, further comprising: the NAF performing subscriber charging and/or control of the subscriber's access to a service application layer according to the subscriber's identity information.

8. The method according Claim 1 or Claim 4 or Claim 5, wherein said NAF is an application server proxy or an application server.

9. The method according to Claim 8, if said NAF is an application server proxy, further comprising: when the NAF forwards a message to other application servers, inserting the subscriber identity information into said message.

10. The method according to Claim 1 or Claim 4 or Claim 5, wherein said subscriber identity information is the complete Profile or part of the Profile related with the subscriber identity, or the subscriber identity.

## Patentansprüche

1. Verfahren für eine Network Application Function NAF zum Beschaffen von Teilnehmeridentitätsinformationen, **gekennzeichnet durch** die folgenden Schritte:
Speichern eines Bootstrapping Transaction Identifier B-TID eines Teilnehmers, der die Authentifizierung bestanden hat, und von dem B-TID entsprechenden Teilnehmeridentitätsinformationen in einer Bootstrapping Server Function BSF im Voraus, wobei die BSF verwendet wird, um eine anfängliche Verifikation der Teilnehmeridentität durchzuführen;
wenn die BSF eine B-TID-Anfragenachricht von der NAF empfängt, Senden des B-TID und der dem B-TID entsprechenden Teilnehmeridentitätsinformationen zu der NAF, wenn der in der B-TID-Anfragenachricht angegebene B-TID in der BSF gespeichert ist; und
Speichern einer Beziehung zwischen dem B-TID und den dem B-TID entsprechenden Teilnehmeridentitätsinformationen in der NAF.

2. Verfahren nach Anspruch 1, ferner mit den folgenden Schritten: Voreinstellen der Zeit des Speicherns der Beziehung zwischen dem B-TID und den dem B-TID entsprechenden Teilnehmeridentitätsinformationen, und wenn sich der Teilnehmer von der NAF trennt, löscht oder verbietet die NAF den B-TID und die dem B-TID entsprechenden Teilnehmeridentitätsinformationen, wenn die voreingestellte Zeit abläuft.

3. Verfahren nach Anspruch 2, wobei die Zeit des Speicherns der Beziehung zwischen dem B-TID und den dem B-TID entsprechenden Teilnehmeridentitätsinformationen die Lebensdauer des B-TID ist.

4. Verfahren nach Anspruch 1, ferner umfassend, wenn der in der B-TID-Anfragenachricht angegebene B-TID in der BSF gespeichert ist: die BSF fährt damit fort, die nachfolgenden Schritte auszuführen, wenn in der B-TID-Anfragenachricht angegeben ist, dass die Teilnehmeridentitätsinformationen benötigt werden.

5. Verfahren nach Anspruch 4, ferner umfassend, wenn in der B-TID-Anfragenachricht angegeben ist, dass die Teilnehmeridentitätsinformationen benötigt werden:
Forfahren mit dem Ausführen der nachfolgenden Schritte, nachdem gemäß den Richtlinien des Betreibers entschieden wird, das Zurückgeben der Teilnehmeridentitätsinformationen an die NAF zu gestatten.

6. Verfahren nach Anspruch 4 oder Anspruch 5, ferner umfassend, wenn die NAF die Teilnehmeridentitätsinformationen, die sie anfordert, nicht erhält: die NAF entscheidet gemäß ihrer eigenen Konfiguration, ob die Kommunikation mit dem Teilnehmer fortgesetzt werden soll.

7. Verfahren nach Anspruch 1, ferner umfassend: die NAF führt Teilnehmer-Gebührenerhebung und/oder Kontrolle des Zugangs des Teilnehmers zu einer Dienstanwendungsschicht gemäß den Identitätsinformationen des Teilnehmers durch.

8. Verfahren nach Anspruch 1 oder Anspruch 4 oder Anspruch 5, wobei die NAF ein Anwendungsserver-Proxy oder ein Anwendungsserver ist.

9. Verfahren nach Anspruch 8, ferner umfassend, wenn die NAF ein Anwendungsserver-Proxy ist: wenn die NAF eine Nachricht zu anderen Anwendungsservern weiterleitet, Einfügen der Teilnehmeridentitätsinformationen in die Nachricht.

10. Verfahren nach Anspruch 1 oder Anspruch 4 oder Anspruch 5, wobei die Teilnehmeridentitätsinformationen das vollständige Profil oder ein die Teilnehmeridentität betreffender Teil des Profils oder die Teilnehmeridentität sind.

## Revendications

1. Procédé destiné à une fonction d'application de réseau, NAF, pour acquérir une information d'identité d'abonné, **caractérisé en ce qu'**il comprend:
le stockage à l'avance d'un identifiant de transaction d'amorçage, B-TID, pour un abonné qui a été authentifié et d'une information d'identité d'abonné correspondant au B-TID dans une fonction de serveur d'amorçage, BSF, ladite fonction BSF étant utilisée pour effectuer une vérification initiale de l'identité d'abonné ;
lorsque ladite fonction BSF reçoit un message de demande de B-TID de ladite fonction NAF, si le B-TID indiqué dans ledit message de demande de B-TID est stocké dans ladite fonction BSF, l'envoi du B-TID et de l'information d'identité d'abonné correspondant au B-TID à la fonction NAF ; et
le stockage de la relation entre le B-TID et l'information d'identité d'abonné correspondant au B-TID dans la fonction NAF.

2. Procédé selon la revendication 1, comprenant en outre : la prédéfinition du temps de stockage de la relation entre le B-TID et l'information d'identité d'abonné correspondant au B-TID et, lorsque l'abonné se déconnecte de la fonction NAF, l'élimination ou le blocage par la fonction NAF du B-TID et de l'information d'identité d'abonné correspondant au B-TID si le temps prédéfini s'est écoulé.

3. Procédé selon la revendication 2, dans lequel ledit temps de stockage de la relation entre le B-TID et l'information d'identité d'abonné correspondant au B-TID est la durée de vie du B-TID.

4. Procédé selon la revendication 1, comprenant en outre, si le B-TID indiqué dans ledit message de demande de B-TID est stocké dans ladite fonction BSF, la poursuite par la fonction BSF de l'exécution des étapes suivantes, si il est indiqué dans ledit message de demande de B-TID que ladite information d'identité d'abonné est nécessaire.

5. Procédé selon la revendication 4, comprenant en outre, si il est indiqué dans ledit message de demande de B-TID que ladite information d'identité d'abonné est nécessaire, la poursuite de l'exécution des étapes suivantes après avoir décidé de permettre le renvoi de l'information d'identité d'abonné à la fonction NAF en fonction de règles de l'opérateur.

6. Procédé selon la revendication 4 ou la revendication 5, comprenant en outre, si la fonction NAF ne parvient pas à obtenir l'information d'identité d'abonné qu'elle demande, la décision par la fonction NAF de poursuivre ou non la communication avec l'abonné en fonction de sa propre configuration.

7. Procédé selon la revendication 1, comprenant en outre l'exécution par la fonction NAF de la facturation d'abonné et/ou du contrôle d'accès de l'abonné à une couche d'application de service en fonction de l'information d'identité de l'abonné.

8. Procédé selon la revendication 1 ou la revendication 4 ou la revendication 5, dans lequel ladite fonction NAF est le mandataire d'un serveur d'application ou un serveur d'application.

9. Procédé selon la revendication 8, comprenant en outre, si ladite fonction NAF est un mandataire de serveur d'application, lorsque la fonction NAF réexpédie un message à d'autres serveurs d'applications, l'insertion de l'information d'identité d'abonné dans ledit message.

10. Procédé selon la revendication 1 ou la revendication 4 ou la revendication 5, dans lequel ladite information d'identité d'abonné est le profil complet ou une partie du profil lié à l'identité d'abonné, ou l'identité d'abonné.
